# EUROPEAN PATENT APPLICATION

(11) **EP 1 315 121 A1**
(43) Date of publication of application: **28.05.2003**
(21) Application number: 02079714.8
(22) Date of filing: 11.11.2002
(51) Int. Cl.: G06K 15/00

(54) **Conditional interrupting of a print job**

(30) Priority: 23.11.2001 NL 1019420
(71) Applicant: Océ-Technologies B.V., 5914 CC Venlo (NL)
(72) Inventor: Roos, Edwin, 5614 CD Eindhoven (NL)
(74) Representative: van Meeteren, Arend Anthonie

(57) **Abstract**

An image reproduction apparatus for connection to a network for printing print jobs, comprising
a printer unit (130) for making images on receiving sheets,
u user interface unit (160) provided with operating elements, a control unit (170) for controlling printing processes and adapted to interrupt an active printing process in response to an interrupt command given via the user interface elements, characterised in that
the control unit is provided with
- a first module to check whether a print job fed via the network contains a predetermined added data item, and
- a second module for carrying out an authorisation check in respect of any interrupt command input during the performance of a certain print job, if the first module detects the presence of such a predetermined added data item in the said print job.

## Description

The invention relates to an apparatus and method for printing print jobs fed from a workstation via a network.

In particular, the invention relates to an image reproduction apparatus for connection to a network for printing print jobs, comprising a printer unit for making images on receiving sheets,
an user interface unit provided with operating elements, a control unit for controlling printing processes and adapted to interrupt an active printing process in response to an interrupt command given via the user interface panel.

By means of the said operating elements, usually keys on an user interface panel, it is possible to intervene in the processing of print jobs. In many printers, an active print job can be definitively stopped by means of a special stop key on the user interface panel.
When this stop key is pressed, the printing process is terminated and the digital image data belonging to the job are either kept locally in the printer for final processing later, or removed directly, depending on the configuration of the specific printer.

The above interruption function is useful, for example, to enable a large print job which has erroneously been submitted to be stopped or for a print job to be prematurely terminated if the settings are found to be wrong during the printing. This prevents waste of printing paper and toner. The facility to interrupt a current print job, however, may lead to errors or negligent use, so that a print job which really was required or was correct may be lost.

There are therefore situations in which it is undesirable to interrupt a current print job.

US-A 5 321 466 describes an interruption protection for a copying machine in the form of a reserve mode. An operator can set this mode, after which it is only possible to operate the machine, including stopping it, after a code has been input. However, this protection is not coupled to the performance of a copying job, i.e., it is not automatically switched off on completion of the job. In addition, this mode has to be set at the machine. Of course this is not possible when dealing with print jobs fed over a network from a workstation, because the user is generally not present at the machine when the performance of the job starts.

It is the object of this invention to provide means whereby a print job fed via the network can be finished undisturbedly.

To this end, according to the invention, the control unit is provided with a first module to check whether a print job fed via the network contains a predetermined added data item, and a second module for carrying out an authorisation check in respect of any interrupt command input during the performance of a certain print job, if the first module detects the presence of such a predetermined added data item in the said print job.

Thus according to the invention print jobs can be provided with an added data item, an "attribute" which specifies that a job of this kind once started in the printer may not be interrupted. The control unit recognises the attribute, if it is present, and in response thereto blocks the interrupt functions that can be operated from the user interface panel, the stop key primarily, but possibly also an "interrupt" key, conditionally. Activation of these functions is possible only if an operator gives evidence that he is authorised to do so, for example by inputting a predetermined interruption code.

The term "interrupt" key in this context means a key which is provided on the user interface panel for a temporary interruption of a current print job so that another job can be carried out. On completion of said other job, the interrupted job can be resumed. By allowing this "interrupt" function only conditionally, it is easier to prevent errors due to the two parts of the job not being joined up properly or completely.

According to one embodiment of the invention, the relevant interruption code is specified in the attribute sent with the print job, and is therefore specific to the relevant print job.

In another embodiment, the control unit is so constructed that it also permits an interruption to a current print job in response to the inputting of a second interruption code pre-programmed in the apparatus, without any relationship with a print job. In this way, a print job can nevertheless be interrupted in the absence of the owner of the job (usually the only one who knows the interruption code transmitted in the attribute). This option is preferably reserved for use by an administrator of the printer. An interrupt facility of this kind not related to the print job can also have the form of an authorising action other than the inputting of a code, for example the operating of a mechanical lock with a key, or an automatic personal recognition process such as automatic analysis of a fingerprint.

The invention also relates to a printer driver, i.e. a program for installation in a workstation such as a PC, and for submitting a print job to a printer via a network, which is characterised by a module adapted to give a print job a predetermined added data item which specifies that the relevant print job may not be interrupted when carried out in a printer.

The invention will now be explained in detail with reference to the accompanying drawings wherein:
Fig. 1 is a diagram of an example of a network system with workstations and a printer.
Fig. 2 is a diagram of an example of a printer for use according to the invention.
Figs. 3 and 4 are illustrations of the job definition window of a printer driver.
Figs. 5 to 7 are illustrations of an user interface panel and the display contents therein.
Figs. 8 and 9 are state diagrams of interrupt processes according to the invention.

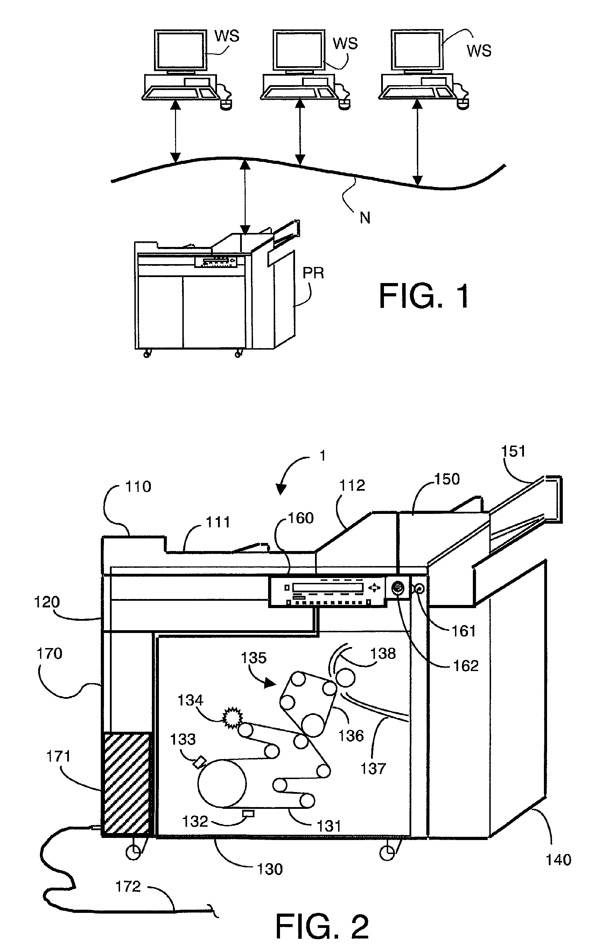

Fig. 1 shows a system of workstations (WS) and at least one printer (PR) connected by a local network (N). Workstations, for example, are PC's and are in each case equipped with a processor unit, a monitor, a keyboard and a mouse or other indicator instrument.
The term "printer" includes a digital copying machine in this context. A digital copying machine comprises a scanner, a printer, an user interface unit and a connection unit (Digital Access Controller or DAC) for connection to the network and processing print jobs submitted from the workstations. Users who wish to have a specific data file printed from their workstation can choose for the purpose from a number of printers or even from all the printers in the system.

As an example, Fig. 2 shows a digital copying machine 1 suitable for use in the system, the various parts being separately shown diagrammatically. These parts comprise a document feeder 110 for physically handling the documents for copying, a scanner unit 112 for generating digital image data corresponding to an image appearing on a document, a printer unit 130 for making prints of images on image supports in accordance with digital image data, a supply unit 140 and a finishing and outputting section 150 for image supports, an user interface unit 160, a control unit 170 and a network connection unit 171.

The document feeder 110 is provided with an input tray 111 for inputting a stack of documents, a transport mechanism (not shown) for transporting the documents one by one along the scanner unit 120 and an output tray 112 in which the documents are placed after scanning.

The scanner unit 120 comprises a flat bed scanner provided with a glass plate on which an original document can be placed, a CCD array and an imaging unit consisting of a movable mirror and lens system for imaging the document on the CCD array. In these conditions, the CCD array generates electrical signals which are converted to digital image data in manner known per se.

The printer unit 130 comprises an electro-photographic processing stage known per se, in which a photo-conductive medium 131 in the form of a belt is charged by means of a corona unit 132 and then exposed by means of an LED array 133 in accordance with digital image data. The charge image thus formed on the medium 131 is developed with toner powder in a developing unit 134, whereafter the toner image is transferred, in a combined transfer and fixing unit 135, to a heated rubber belt 136. On this belt 136 the toner powder softens as a result of the heat of the belt 136 and becomes tacky. It is then transferred and fixed on an image support, usually a sheet of paper, fed from a supply stage 140 via a conveyor 137.

A supply of image supports (for example sheets of paper) in different sizes and orientations is available in the supply unit 140.

The image supports with the toner image are transported via a conveyor 138 to the finishing and outputting section 150, which if necessary collates them into sets and staples them and then deposits them in the delivery tray 151.

The user interface panel of the unit 160 is provided with a display screen and keys. Unit 160 is connected to the control unit 170 and the network connection unit 171. The unit 160 also includes a contact lock 161 for switching on and off a special operating mode and a fingerprint scanner 162 for recognition of an operator.

The control unit of the printer 1 is shown diagrammatically by reference 170. It comprises a microprocessor, a memory and suitable hardware circuits, and comprises modules for controlling the units 110, 120, 130, 140, 150 and 160 and an image processing module for processing the digital image data so that prints of good image quality can be made by the printer unit 130.

As already stated, the apparatus also includes a network connection unit (Digital Access Controller or DAC) 171 for connection to a local network N, which is diagrammatically shown here in the form of a cable 172. The network connection unit 171 receives print jobs from the workstations, converts them to a format that can be processed by the printer unit 130 and in co-operation with the control unit 170 ensures that they are printed on image supports.

A program for sending print jobs to the printer is operative in the workstations WS. A program of this kind is termed a "printer driver" and is logically coupled via the network N to one or more printers. When a user wants to send a print job, he calls up the printer driver, for example by clicking an icon intended for the purpose in the application window on his monitor. In response, the printer driver displays a job window on the workstation monitor, into which the user can input specifications for the intended print job, such as the number of copies, single or double sided printing and so on.

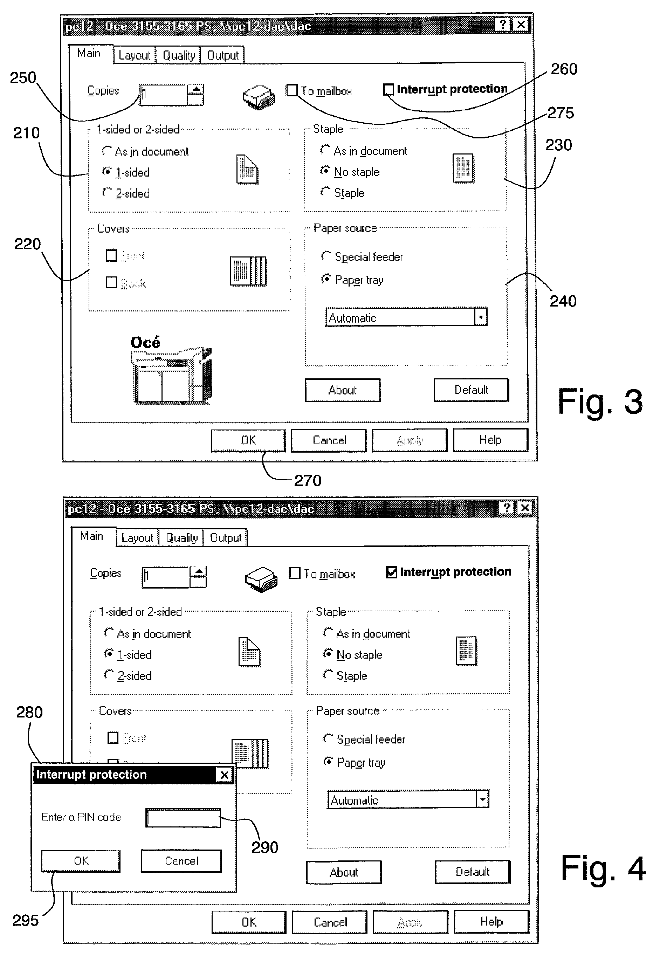

An example of a job definition window of this kind is shown in Fig. 3. It comprises various boxes 210, 220, 230 and 240 with radio buttons and tick boxes for making print settings and a number box 250 for the number of copies. Tick box 260 is for setting interruption protection. At the bottom of the job window are a number of soft keys, including key 270 ("OK"), by means of which the submission process for the print job is started.

When the user has filled in tick box 260 when entering settings and has clicked on key 270, an extra data item is added as an attribute to the data file for printing, and this attribute is recognised by the network connection unit 171 of the printer. The printer then treats the print job as a one which cannot be interrupted.

The added attribute contains an interruption code which is defined by the user when giving the print order. In response to clicking on the "OK" key 270, the printer driver displays an input window 280 for inputting an interruption code (a figure combination) on the monitor. This is shown in Fig. 4.

After the user has input the interruption code in box 290, and has clicked the key 295 ("OK"), the print job is actually sent to the printer.

As an alternative to inputting an interruption code by the user by means of an inputting window 280, a fixed code programmed in the intended printer driver can be automatically filled in. An interruption code of this kind is included, for example, in the configuration file of the printer driver and is filled in on installation.

Print jobs are not necessarily dealt with immediately after receipt by the printer. There is, for example, a category of print jobs which by means of a suitable mechanism in the control unit 170 and network connection unit 171, are locally stored and not printed after receipt at the printer. In the case of a print job of this kind, which is also termed an interactive print job, the network connection unit 171 extracts the identification data from the print file, and the data are then administered and on command presented for selection on the user interface panel display screen by the control unit 170. An operator can then select a print job and start it with the start key 61. The associated administration of the control unit 170 can be regarded as a set of virtual mailboxes of users. Interactive printing is described, for example in Applicants' European Patent Application EP-A 0 944 239.

In defining a print job, a user can indicate that the print job is an interactive job, by ticking the box 275 in the job window (Fig. 3). If he has also ticked box 260, the job is defined as being non-interruptible. If a print job of this kind is started at the machine, the interruption protection automatically comes into operation in the same way as described above in the case of a non-interactive print job.

A description of the operation of the interrupt protection will now be given, in the case in which an operator of the printer tries to interrupt an active print job.

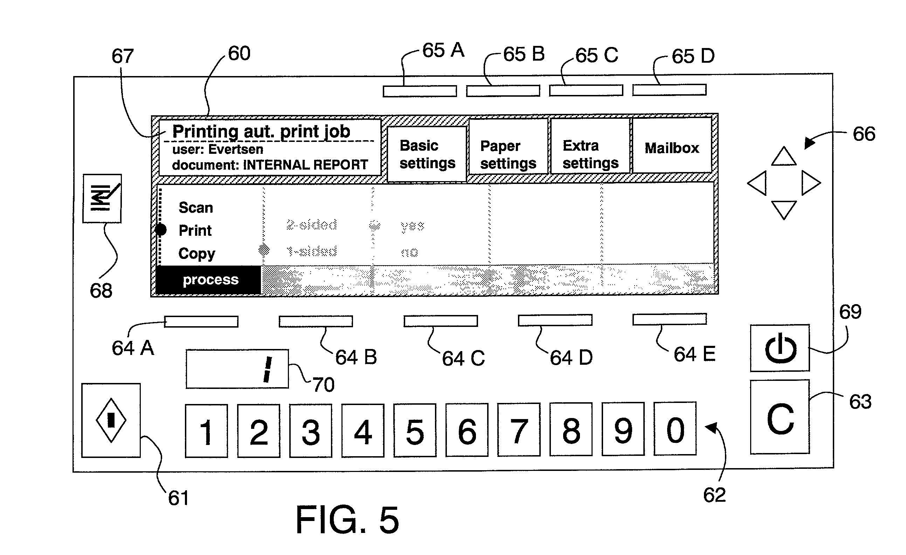

The user interface panel of the unit 160 of the printer 1 is shown in Fig. 5 and comprises a display screen 60, such as an LCD display, and a number of keys, namely a start key 61, number keys 62, correction key 63, interrupt key 68, a stop key 69, selection keys 64A-E, 65A-D, and the key cluster 66. All these elements are connected to the user interface unit, which in response to operation of the keys transmits signals to the control unit 170 and which also, by way of the user interface unit 160, controls the display 60 to show possible options and messages to the operator.

When the machine is switched on, the display 60 shows an image formed by a number of vertical columns in each case situated above one of the selection keys 64A-E. Each column relates to a specific basic function of the machine and shows the various possible settings of that basic function. For example, the column on the extreme left is allocated to the selection between a copying function in which a document is scanned by the scanner and then reproduced, a printer function for interactive printing, in which a print is made of an interactive data file for printing as supplied via the network, and a scanner function in which a document is scanned and a corresponding scan file generated, which can then be retrieved by a workstation. The instantaneously selected setting, in this case the copying function, is indicated by a symbol, such as a dark dot, or by highlighting.

An operator can select a different setting, for example in a cyclic manner, by actuating a selection key. As a result of a change of a setting the function of one or more of the other selection keys may change, because the old function is no longer relevant and other selection options are required. Other text relating to the new function then appears in the relevant column of the display 60.

The selection keys 65A-D offer the possibility of calling up a different set of functions which cannot be displayed simultaneously due to the restricted dimensions of the display 60. These are generally functions which are not required for a simple copying or print job, but which offer the operator more options for obtaining particular printing results. In this example, these functions comprise shifting the margin on the print, adding covers and multiple up. The meaning of the keys 65A-D is indicated in an associated field on the display 60, directly beneath each key. When one of the keys is pressed, the corresponding set of functions is activated and the make-up of the display 60 is adapted to the associated functions. At the same time, this selection is made clear by shifting or otherwise highlighting the field on the display 60 associated with the actuated key of the group 65A-D. A special box 67 on the display 60 is intended for indicating the machine status and for any messages to the operator.

The user interface panel also contains a number display 70 for showing the selected number of copies to be printed, as is generally customary on copying machines.

If a print job has automatically been started by the control unit 170, the column above key 64A shows that the printer function is active and the columns above the keys 64B and C indicate the settings specified in the print job for single/double sided printing and stapling. These columns are shown in grey to indicate that these settings are at the moment not open to selection or change.

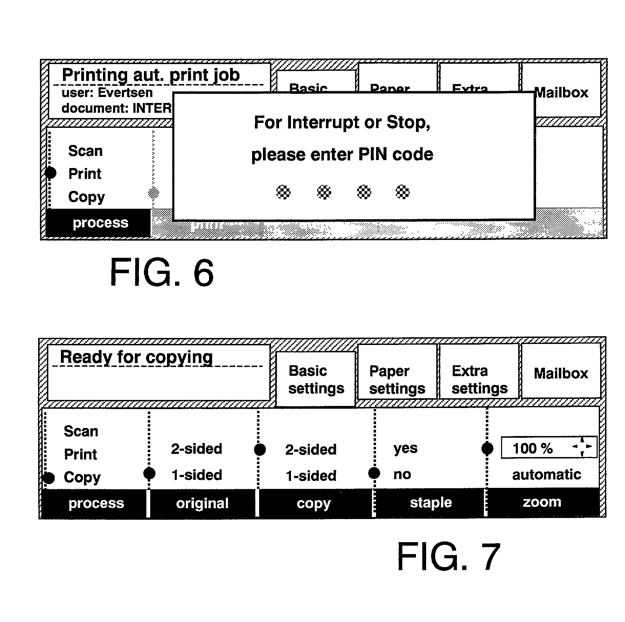

When an operator selects the copying function by means of key 64A (this is shown in Fig. 7) the columns above the keys 64B and C in the basic settings heading denote: single sided or double sided printing, with respect to the original document or the copy sheet, respectively, 64D: stapling, and 64E: the enlargement setting relating to the finishing of the copying job.

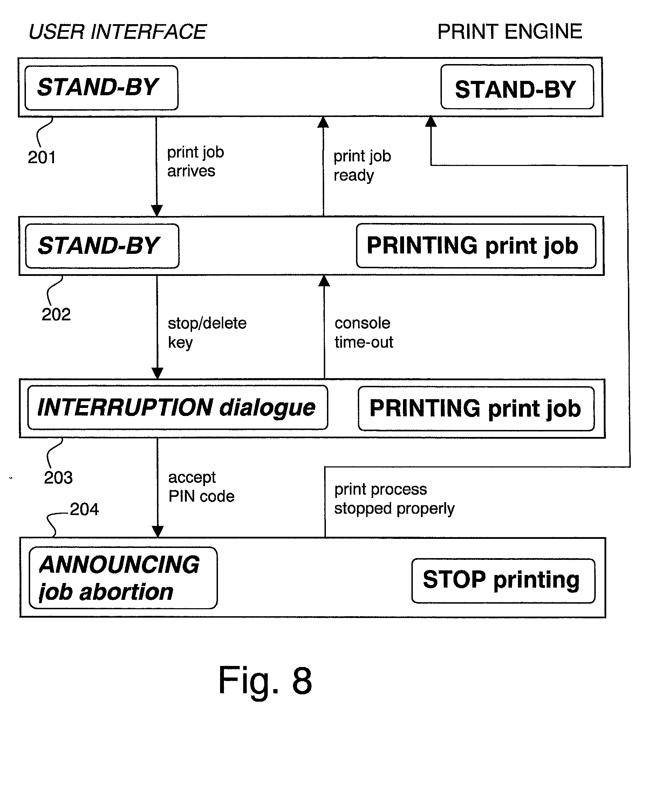

Fig. 8 is a diagrammatic example of the control process carried out when an operator presses the stop key 69 during a printing process of a print job protected against interruption. In this example, the machine states 201-204 are shown, including both the state of the user interface unit 160 and the corresponding state of the control unit 170 in relation to the printer unit 130 of the machine (print engine).

The apparatus is at rest in state 201. Both the user interface unit 160 and the control unit 170 and the printer unit 130 are in the stand-by state.

When a print job is received from a workstation, state 202 is entered, in which the control unit 170 first of all detects whether the print job received is a job which is protected from interruption, and it then prints the print job. In this state the user interface unit 170 remains in stand-by (but shows a display as illustrated in Fig. 5 on the user interface panel display).

A job that is protected against interruption comprises an added data item, an attribute, which characterises the associated print data file as such. An interruption code required to interrupt the associated job is specified in that attribute. If the print job is finished without further disturbance, the apparatus returns to state 201.

If, in state 202, i.e. during the printing of a (protected) print job, an operator presses the stop key on the user interface panel, the machine passes to state 203. In this state, the user interface unit 160 enters into a forced dialogue with the operator, by displaying on the display a request to key in an interruption code, as shown in Fig. 6. In the meantime, the control unit 170 allows the printer unit 130 to continue with printing the current print job.

If the operator does not key in an interruption code, or keys in an incorrect interruption code on the user interface panel, the machine returns to state 202, possibly after expiry of a fixed interval of time ("time out"), and the print job is finished.

If the operator inputs the correct interruption code, the machine passes to state 204. In this state the user interface unit 160 displays on the display 60 a message indicating that the current print job is terminated, and the control unit 170 stops the printer unit 130 of the machine in such a manner that the machine is ready to carry out a new job. The latter implies, inter alia, that all the print sheets already separated are removed from the processing stage. The apparatus then returns to state 201 in which the user interface unit 160 displays on the display 60 a display as shown in Fig. 7.

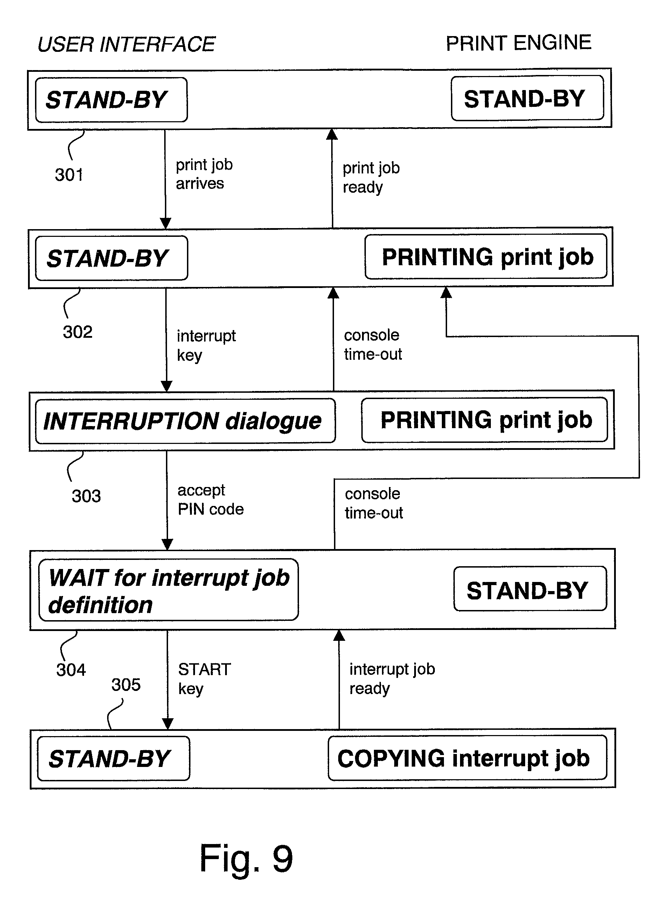

In the same way as in Fig. 8, Fig. 9 shows a diagrammatic display of the control process carried out when an operator presses the interrupt key 68 during a printing process of a print job protected from interruption.

The machine is at rest at state 301. Both the user interface unit 160 and the control unit 170 and the printer unit 130 are in the stand-by state.

When a print job is received from a workstation, state 302 is entered, in which the control unit 170 first detects whether the received print job is a job protected against interruption, and then prints the print job, while the user interface unit 170 remains in the stand-by state (although the screen of the user interface panel shows the display as shown in Fig. 5). When the print job has been finished without further disturbance, the machine returns to state 301.

When, in state 302, i.e. during the printing of a (protected) print job, an operator presses the interrupt key 68 on the user interface panel, the machine passes to state 303. In this state the user interface panel 160 enters into a forced dialogue with the operator by displaying on the display a request to key in an interruption code (see Fig. 6). In the meantime, the control unit 170 allows the printer unit 130 to continue printing the current print job.

If the operator does not input an interruption code, or if he inputs an incorrect interruption code on the user interface panel, the machine returns to state 302, possibly after expiry of a fixed interval of time, and the print job is finished.

If the operator inputs the correct interruption code, the machine passes to state 304 in which the user interface unit 160 displays on the display 60 a message indicating that the current print job is temporarily stopped, and the control unit 170 stops the printer unit 130 of the machine in such a manner that the machine is ready for performing a new job. The user interface unit then gives the user the opportunity of inputting settings for the interrupt job via the user interface panel which at that time has the display shown in Fig. 7.

After making the settings for the interrupt job, he can press the start key 61, after which the machine passes to state 305 in which the interrupt job is carried out.

Once the interrupt job is finished, the machine automatically returns to state 304 and awaits the starting of any following interrupt job. If an operator does not start a following interrupt job, then after a specific waiting time ("time out") the machine automatically returns to state 303 and the interrupted print job re-starts. This also occurs if an operator does not start an interrupt job after entering the interrupt state 304.

In the foregoing, the interruption code described is a code which is added in the said attribute to a print job protected against interruption. In addition it is also possible to define for the machine a fixed code which is not coupled to a specific print job but is operative on all print jobs. This interruption code is required as an aid for a key operator or a printer administrator. A key operator is a privileged operator who administers the printer and carries out minor maintenance, and has special rights. The said special interruption code can be programmed by the key operator himself in order to prevent misuse by others. It is also possible to allow interruption via mechanical means such as a lock and key as shown in Fig. 2, element 161. This key will preferably be kept and handled by a key operator.

The printer could also be equipped with means for recognising a key operator, after which the interrupt functions blocked in the print job are unblocked. A fingerprint scanner shown in Fig. 2, element 162, could be used for this purpose, but other alternative means for the purpose are known to the skilled person.

In the foregoing, a copying job has been described as the interrupt job. However, it is within the scope of the invention to treat as interrupt jobs other jobs which are started by means of the machine user interface panel. It may, for example, be an interactive print job as described hereinbefore.

Although the invention has been explained by reference to the exemplified embodiment described above, it is not restricted thereto. It will immediately be apparent to the skilled person that other embodiments are possible within the scope of the claims.

## Claims

1. An image reproduction apparatus for connection to a network for printing print jobs, comprising
a printer unit (130) for making images on receiving sheets,
an user interface unit (160) provided with operating elements,
a control unit (170) for controlling printing processes and adapted to interrupt an active printing process in response to an interrupt command given via the user interface elements,
**characterised in that**
the control unit is provided with
- a first module to check whether a print job fed via the network contains a predetermined added data item, and
- a second module for carrying out an authorisation check in respect of any interrupt command input during the performance of a certain print job, if the first module detects the presence of such a predetermined added data item in the said print job.

2. Apparatus according to claim 1, wherein the authorisation check consists of asking, via the user interface unit (160), for an interruption code and checking the correctness of a code input in response thereto via the operating elements.

3. Apparatus according to claim 2, wherein the predetermined added data item contains a specification of the interruption code.

4. Apparatus according to claim 2, wherein the control unit also allows interruption in response to the inputting of a second interruption code pre-programmed in the apparatus without any relationship to a print job.

5. Apparatus according to claim 1, wherein the control unit is provided with means for recognising a predetermined authorising action of an operator and also allows interruption when such an authorising action is performed.

6. Apparatus according to claim 5, wherein the said means comprise a mechanical lock.

7. Apparatus according to claim 1, wherein the control unit is provided with means for recognising a predetermined operator, and also allows interruption after recognition of said operator.

8. Apparatus according to claim 2, wherein the inputting of interruption code is carried out by means of a forced dialogue on a display screen of the user interface unit in response to the operation of a key connected to an interrupt function.

9. Apparatus according to claim 1, wherein the interruption comprises a complete termination of the active print job.

10. Apparatus according to claim 1, wherein the interruption comprises an interrupt job.

11. A printer driver for use in a workstation for submitting print jobs via a network to a printer, **characterised by** a module adapted to give a print job a predetermined added data item which specifies that the relevant print job may not be interrupted when carried out in a printer.

12. A method of printing print jobs in an image reproduction apparatus connected to a network, said apparatus being provided with a printer unit (130) for making images on receiving sheets, an user interface unit (160) provided with operating elements, a control unit (170) for controlling printing processes,
comprising interrupting an active print job in response to an interrupt command given via the user interface unit (160),
**characterised by** the performance of the following steps:
- checking whether a print job fed via the network contains a predetermined added data item, and
- carrying out an authorisation check in respect of any interrupt command input in connection with the said print job, if the first module detects the presence of such a predetermined added data item in a certain print job.

13. A method according to claim 12, wherein the authorisation check consists of asking, via an user interface panel, for an interruption code and checking the correctness of a code input via the user interface panel in response thereto.

14. A method according to claim 13, wherein the predetermined added data item contains a specification of the interruption code.

15. A method according to claim 13, also comprising allowing an interruption in response to the inputting of a second interruption code pre-programmed in the apparatus without any relationship to a print job.

16. A method according to claim 12, also comprising automatically allowing an interruption when a specific authorising action is carried out.

17. A method according to claim 16, wherein the said specific authorising action comprises operating a mechanical lock.

18. A method according to claim 12, also comprising automatically allowing an interruption after automatic recognition of a predetermined operator.

19. A method according to claim 13, wherein the inputting of an interruption code is carried out by means of a forced dialogue on a display screen in an user interface panel in response to the operation of a key connected to an interrupt function.

20. A method according to claim 12, wherein the interruption comprises a complete termination of the current print job.

21. A method according to claim 12, wherein the interruption comprises an interrupt job.
